# EUROPEAN PATENT SPECIFICATION

(11) **EP 2 777 815 B1**
(45) Date of publication and mention of the grant of the patent: **19.07.2017**
(21) Application number: 13159633.0
(22) Date of filing: 15.03.2013
(51) Int. Cl.: B02C 21/02, F16H 7/12

(54) **Crusher belt tensioning apparatus**
Brechergurtspannungsvorrichtung
Appareil de tension de courroie de concasseur

(43) Date of publication of application: 17.09.2014
(73) Proprietor: Sandvik Intellectual Property AB, 811 81 Sandviken (SE)
(72) Inventor: Talbot, Sian, Swadlincote, Derbyshire DE11 9DU (GB); Wheatley, Martin, Swadlincote, Derbyshire DE11 9DU (GB); Murr, Richard, Swadlincote, Derbyshire DE11 9DU (GB)

(56) References cited:
- WO-A1-03/087626
- WO-A1-2008/140951
- AT-A1- 511 908
- CN-U- 202 597 613
- DE-A1- 2 707 247
- DE-A1- 3 631 117
- DE-C- 813 799
- US-A- 5 286 233

## Description

### Field of invention

The present invention relates to a crusher belt tensioning apparatus and in particular, although not exclusively, to a crusher processing unit having a belt coupling a drive shaft of a crusher and a separate drive shaft associated with a motor with a tensioning device forming a part of the drive assembly and configured to apply tension to the belt.

### Background art

A variety of different crushers have evolved suitable for processing stone, minerals and both domestic and industrial waste including construction materials to generate smaller particulate material and aggregate for subsequent processing or disposal. Conventional crushers include gyratory, impact, vibration and jaw crushers. Typically, the crusher is provided with a hopper for receiving the bulk material and a discharge conveyor to transfer the processed and crushed material to a discharge location. In certain situations, a supply conveyor feeds the material to be processed into a crusher hopper.

Crushers may be categorised further into stationary crushers designed for large static installations that are assembled on site e.g. at a quarry or mine environment where they remain until the source of raw material is exhausted.

However, there is substantial demand for crushers that are readily transportable from one site to another, for example on a low loader or by being towed as trailed vehicle. A second category of crusher is accordingly regarded as transportable and typically comprises endless tracks mounted at an undercarriage which is in turn supported by a main chassis of the mobile unit. The chassis further supports both feed and discharge conveyors extending to and from a crusher mounted generally centrally within the mobile unit.

An on-board mounted power unit is configured to drive operation of the crusher via a belt drive assembly in which a belt is mounted about a pair of pulleys respectively connected to a crusher drive shaft and a powered drive shaft so as to transfer drive from a motor, typically a diesel engine, to the crusher. Conventionally, a belt tensioning device is mounted at the main chassis and provides tension to the belt to both prevent belt slippage over the pulley wheels and in particular to redress belt stretch following periods of use. However, conventional belt tensioning devices are disadvantageous for a number of reasons. In particular, where the tensioning device utilises a drum to contact an external facing side of the belt, it is common for the belt to misalign at the drum and to impart vibrations to the revolving belt resulting in high belt and bearing temperatures. Additionally, some tensioning devices utilise a coil spring forming a part of and axially aligned with a linear rod to absorb vibration and tension forces imparted to the belt particular during crusher start-up and shut-down which would otherwise damage the crusher and motor drive shaft. Example tensioning devises are described in WO 03/087626; WO 2008/140951; AT 511908 and DE 813799.

However, such tensioning devices are large and difficult to accommodate on a mobile crusher where available space at the chassis is limited. Additionally, conventional shock absorbing spring arrangements are susceptible to accumulation of dirt causing them to crack to become coil bound preventing shock absorbing compression as intended. A further problem exists with the mounting of tension pulleys that are susceptible to belt misalignment due to their mounting arrangement. Additionally, conventional mountings for tension pulleys tend to be large and again difficult to accommodate at the mobile chassis frame. What is required is a belt tensioning device for a crusher and in particular a mobile crusher that solves the above problems.

### Summary of the Invention

It is an objective of the present invention to provide a belt tensioning apparatus for a crusher and in particular a mobile crushing unit that is effective to apply a varying degree of tension to the belt of a belt drive unit extending between a drive motor and the crusher. It is a further objective to provide a belt tensioning assembly that is adjustable via a convenient action by service personnel. It is a further objective to provide a belt tensioning assembly configured to dissipate vibration and distortion forces at the belt drive assembly. It is a yet further objective to minimise as far as possible and potentially eliminate the transfer of loading forces between a crusher drive shaft and a powered motor driven shaft.

The objectives are achieved, in part, by a tension assembly in which a tension pulley is mounted towards one end of a swing arm. The tension assembly comprises a plurality of independent shock absorbing components to dissipate and effectively transfer vibration and loading forces into a support frame of the tension assembly and in turn a main frame of the crusher unit. The present tensioning assembly is advantageous to avoid belt misalignment at a region of tensioning pulley and to reduce as far as possible the size of the tension assembly to provide a compact construction to facilitate mounting at the crusher unit. Accordingly, the present tensioning assembly is particularly suitable for mounting at a mobile crushing unit where available space is restricted.

Additionally, the present assembly is advantageous by providing a single tension pulley in contact with the drive belt and enables positioning of this tensioning pulley at an inside region of the drive belt consistent with the mounting of the crusher and drive pulleys. Accordingly, the present tensioning assembly does not require any additional drums or pulleys mounted at an external facing side of the belt. The present tensioning assembly is configured via a linear actuator to provide an increased range of movement of the tensioning pulley at the belt relative to conventional systems. Accordingly, the present tensioning assembly is capable of applying tension up to and around 2% elongation of the belt whilst achieving a predetermined operational tension in the belt.

According to a first aspect of the present invention there is provided crusher belt tensioning apparatus for mounting at a crusher unit having a crusher pulley mounted at a shaft to actuate a crusher forming part of the unit, a drive pulley mounted at a shaft driven by a motor and a belt extending around the crusher pulley and the drive pulley to transfer drive from the motor to the crusher, the apparatus comprising: a base frame mountable at a chassis frame of the crusher unit; a tension pulley mounted at the base frame to contact and apply a tension force to the belt; a swing arm pivotally mounted at the base frame via a first region of the swing arm, the tension pulley mounted at a second region of the swing arm; and characterised by: a linear actuator having a first end attached to the base frame and a second end attached to the swing arm to act between the base frame and the swing arm to control a position of the swing arm and the tension pulley relative to the base frame.

Reference within the specification to a '*motor*' includes a generic power unit including in particular an electric, diesel and hydraulic drive or engine. Additionally reference within the specification to a '*drive pulley*' and a '*drive shaft*' refer to the mounting of the pulley or shaft to be associated with the powered motor drive unit. These terms encompass coupling to the motor via an intermediate clutch used for example with a diesel engine. Accordingly, the drive pulley and drive shaft may alternatively be referred to as the clutch pulley and clutch shaft.

Preferably, the swing arm is pivotally attached to the base frame at or towards a first end of the swing arm, the tension pulley rotatably mounted at or towards a second end of the swing arm.
Preferably, the actuator comprises a linear extendable rod having a first end attached to the base frame and a second end attached to the swing arm. Preferably, the apparatus further comprises a shock absorber ram having a first end attached to the base frame and a second end attached to the swing arm.
Advantageously, the belt defines a belt circuit having an inner region enclosed by the belt and is configured such that the tension pulley is mounted within the inner region enclosed by the belt circuit to contact an inward facing side of the belt. Preferably, the tension pulley is mounted at the swing arm via a spindle and bearing assembly. Preferably, the swing arm comprises a bearing housing positioned at or towards the second end of the arm to house bearings and at least a part of the spindle. Optionally, a region of a radially outer surface of the tension pulley is positioned over the bearing housing relative to a longitudinal axial of the spindle. This is advantageous to minimise the length in the longitudinal axis direction of the pulley mounting assembly including the mounting spindle.

Optionally, the actuator comprises a threaded shaft cooperating with a threaded sleeve such that by cooperation of the threads of the shaft and the sleeve the shaft is configured for linear extension and retraction relative to the sleeve. Preferably, actuator comprises two threaded shafts extending from and cooperating with a central and single threaded sleeve. Optionally, the actuator comprises a turnbuckle.

Preferably, the actuator is mounted at the base frame via an axel assembly at least partially accommodated within an axel mount provided at the base frame, the axel assembly comprising: an axel having a length extending substantially perpendicular or transverse to a length of the actuator; at least one bushing mounted about the axel and accommodated within the axel mount; wherein a force may be transmitted from the actuator via the axel and the bushing to the base frame.

Optionally, the apparatus comprises two bushings positioned about the axel either side of the actuator in the axial direction of the axel.

Optionally, the second end of the absorber ram is attached at or towards the second end of the swing arm and the second end of the actuator is attached to a region along a length of the swing arm between the first end and the second end of the arm. Optionally, the first end is mounted at or towards a lower region of the base frame and the second end of the actuator is mounted at a pivot pin provided at the swing arm.

According to a second aspect of the present invention there is provided a mobile crusher unit comprising an undercarriage configured to allow the mobile crusher unit to move in contact with the ground, a chassis, or main frame to mount the undercarriage and a motor powered belt driven crusher mounted at the chassis frame comprising belt tensioning apparatus as claimed herein. The undercarriage may comprise endless tracks and/or wheels to allow the unit to move over the ground.

Optionally, the belt extends around the crusher pulley and the drive pulley to define a belt circuit having an inner region enclosed by the belt; the tension pulley is mounted at the belt circuit in contact with the belt and within the inner region enclosed by the belt; and the actuator is configured to change the position of the tension pulley between a first position in the which the tension pulley imparts a high tension force to the belt and a second position in the which the tension pulley imparts a low tension force to the belt relative to the high tension force

Optionally, the apparatus may comprise an axel assembly mounted at an axel mount provided at the base frame, the actuator mounted at the base frame via the axel assembly, the axel assembly comprising: an axel having a longitudinal axis extending perpendicular or transverse to a longitudinal axis of the actuator and at least partially housed within the axel mount; at least one bushing mounted about the axel and accommodated within the axel mount; wherein a force may be transmitted from the actuator via the axel and the bushing to the base frame.

Preferably, the actuator comprises an eyelet at the first end, the actuator mounted at the axel via the eyelet.

Preferably, the axel mount comprises a pair of hollow drums attached to the base frame, each bushing accommodated within a respective drum, the axel extending within each bushing and each drum such that each bushing is positioned radially intermediate the axel and a respective drum. Preferably, each bushing is substantially cylindrical having a central bore to accommodate at least part of the axel.

Preferably, the axel comprises a threaded bore projecting axially inward from each respective end of the axel.

Preferably, the at least one bushing comprises a resiliently deformable material. Optionally, the bushing comprises polyurethane.

Preferably, the apparatus further comprises a shock absorbing ram attached at a first end to the base frame and having a second end mounted in connection with the tension pulley.

Preferably, the belt is a V-belt assembly and the tension pulley comprises a grooved radially outward facing surface to accommodate at least partially ribs projecting from the V-belt assembly.

Optionally, the apparatus comprises a tension pulley mounting assembly mounted in connection with the actuator second end, the mounting assembly comprising: a housing drum having an internal chamber; a spindle having a first axel region mounted within the drum and a second axel region extending from the drum, the tension pulley mounted at the spindle via the second axel region; and a plurality of bearings mounted radially intermediate the drum and the spindle.

Preferably, the apparatus comprises two bearings, a first bearing positioned at or towards a first end of the spindle and a second bearing positioned axially between the first bearing and an axial end of the housing from which the spindle extends.

Optionally, the tension pulley comprises: a radially outward belt contact part having a grooved outer surface; a hub mounted about the second region of the spindle; and a spoke bridge extending radially between the hub and the belt contact part; wherein at least a region of the belt contact part overhangs the drum and the first region of the spindle in the longitudinal axis direction of the spindle. Optionally, the second region of the spindle comprises a groove to accommodate a key to sit radially between the tension pulley and the spindle to releasably lock the tension pulley to the spindle.

Preferably, the apparatus further comprises a movable arm coupled to the base frame, the tension pulley mounting assembly mounted at a region of the movable arm.

Preferably, a longitudinal axis of the spindle extends substantially perpendicular or transverse to a length of the movable arm. Optionally, the movable arm and the drum are formed integrally relative to one another.

Optionally, the spindle comprises a stepped configuration along its length having axial sections of different external diameter. Preferably, a largest diameter section of the spindle is positioned within the drum and each respective bearing is positioned axially either side of the largest diameter section.

Preferably, the linear actuator comprises a threaded shaft cooperating with a threaded sleeve such that by cooperation of the threads of the shaft and the sleeve the shaft is configured for linear extension and retraction relative to the sleeve.

Advantageously, an axial length of the first region of the spindle is greater than an axial length of the second region of the spindle. Preferably, an internal facing surface of the drum comprises a stepped configuration between a first end and a second end to define an internal chamber having sections of different internal diameter.

### Brief description of drawings

A specific implementation of the present invention will now be described, by way of example only, and with reference to the accompanying drawings in which:
Figure 1 is a side elevation view of a mobile crushing plant having a feed and discharge conveyor, a central crusher, a pair of endless tracks and a drive belt arrangement according to a specific implementation of the present invention;
Figure 2 is a magnified perspective view of a belt tensioning assembly associated with the drive components of the crusher of figure 1;
Figure 3A is a perspective view of the drive components of the crusher of figure 1 having a belt that extends around a series of pulleys;
Figure 3B is a perspective view of the drive components of the crusher of figure 1 illustrating the different positions of the tension pulley relative to the drive and crusher pulleys within the belt circuit according to a specific implementation of the present invention;
Figure 4 is a front perspective view of the belt tensioning assembly of figure 3A;
Figure 5 is a rear perspective view of the belt tensioning assembly of figure 4;
Figure 6 is a front perspective view of a lower region of the belt tensioning assembly of figure 4;
Figure 7 is a part exploded perspective front view of the tensioning assembly of figure 4;
Figure 8 is a perspective cross section view through a lower region of the assembly of figure 6;
Figure 9 is an underside view of the assembly of figure 4;
Figure 10 is a cross section perspective view through a tensioning pulley mounted at a moveable arm via a spindle forming part of the assembly of figure 3A;
Figure 11 is a further cross section perspective view of the tension pulley mounting of figure 10;
Figure 12 is a perspective exploded view of the tension pulley mounting of figure 11.

### Detailed description of preferred embodiment of the invention

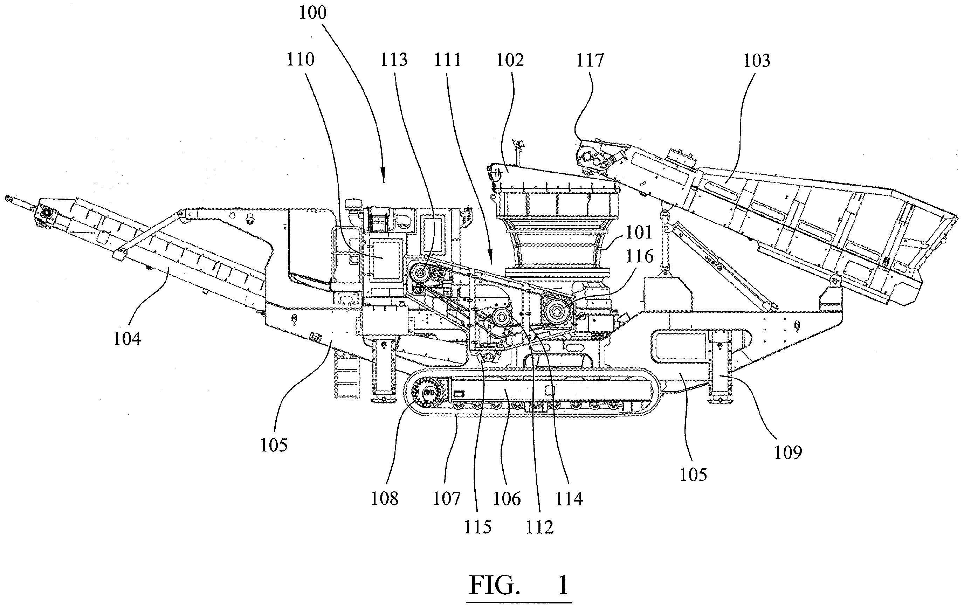

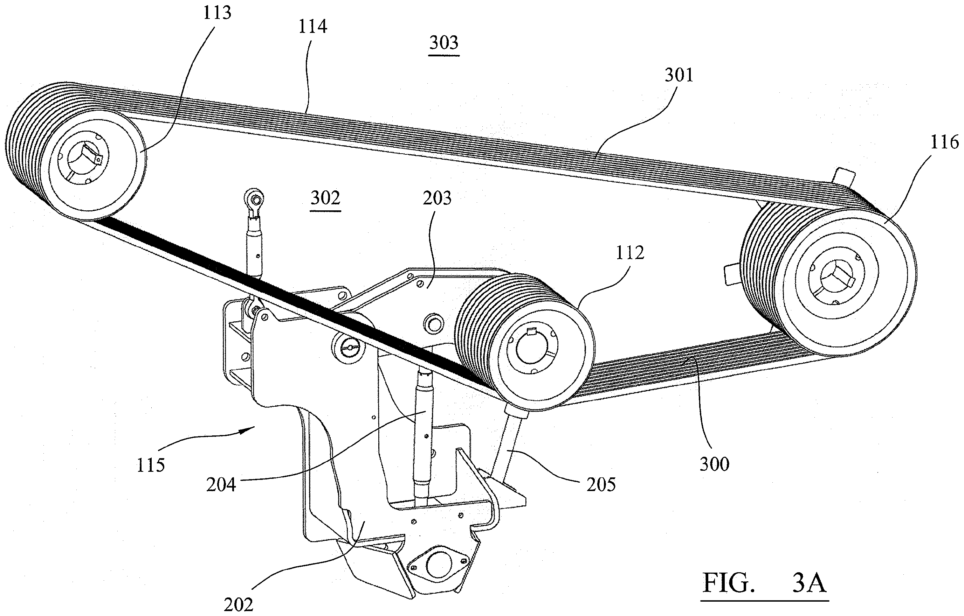

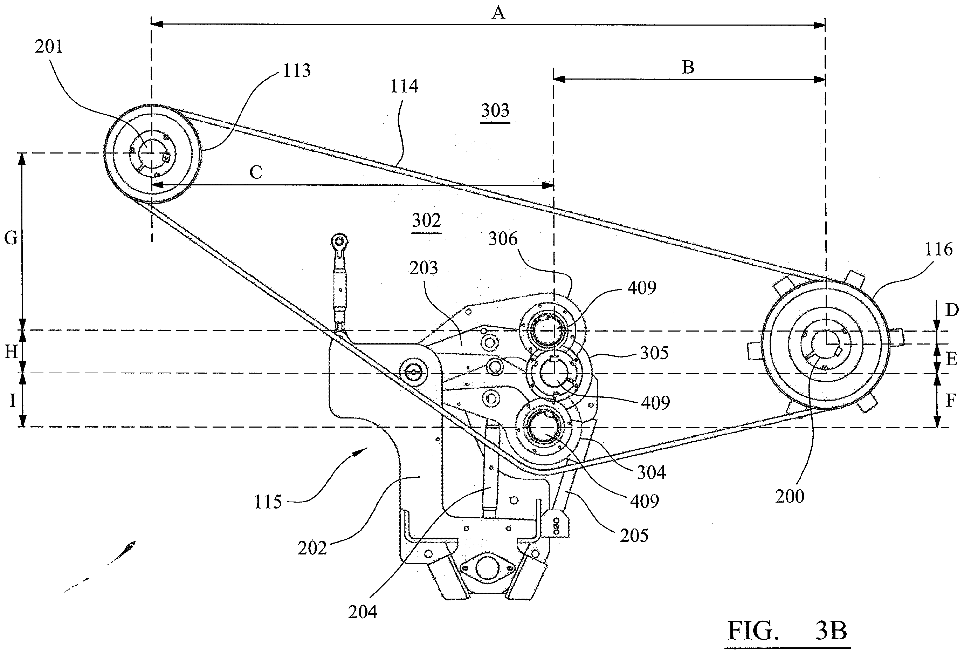

Referring to figures 1 and 3, a mobile crushing plant 100 comprises a main frame 105 providing a central support for the operative components of the plant 100. A chassis 106 is mounted to a lower region of frame 105 that in turns mounts two sets of a plurality of wheels 108 around which extend respectively a continuous belt track 107. In particular, plant 100 comprises a pair of endless tracks 107 (and associated drive components) positioned laterally at each side of chassis 106 at the lower region of frame 105. Wheels 108 are driven by a power unit 110 so as to drive each belt 107 to propel plant 100 over the ground.

A plurality of stabilising legs 109 project downwardly from frame 105 and comprise hydraulic rams (not shown) for lowering into contact with the ground to help stabilise plant 100 during use. Frame 105 further supports a feed conveyor 103 having a discharge end 117 positioned vertically above a crusher 101 mounted substantially at frame 105 above chassis 106. In particular, crusher 101 comprises an upper feed input hopper 102 that receives material to be crushed from discharge end 117. A discharge conveyor 104 projects forwardly of frame 105 and is arranged to receive material discharged from crusher 101 and to discharge the crushed material at a suitable stock pile location.

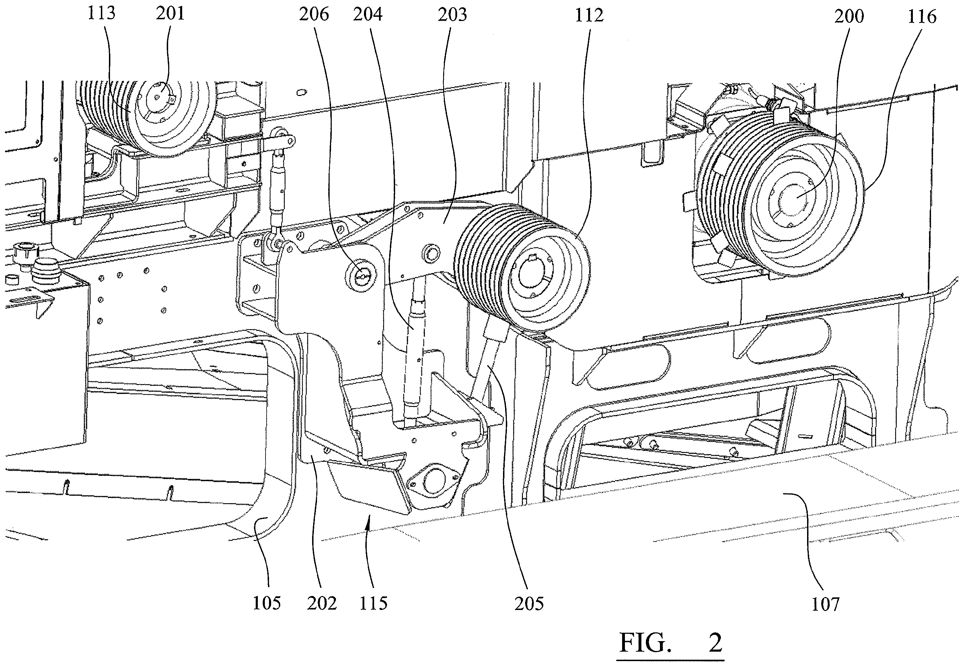

Crusher 101 according to the specific implementation is a cone crusher in which a crushing head (not shown) is mounted upon a shaft (not shown) configured to undergo gyroscopic procession within a crushing chamber (not shown) so as to crush material within a crushing gap defined by opposed inner and outer crushing shells (not shown). Referring to figures 1 and 2, a drive shaft 200 is coupled to the crusher main shaft (not shown) at one end and a crusher pulley 116 at a second end. A corresponding drive pulley 113 is coupled to one end of drive shaft 201 having a second end coupled to drive motor 110. In particular, drive motor 110 comprises a diesel engine in turn coupled to a clutch. Drive pulley 113 according to the specific implementation, is mounted directly to the clutch via drive shaft 201 and therefore indirectly coupled to the drive motor 110. An endless belt 114 extends around pulleys 116 and 113 so as to transfer drive from pulley 113 to 116 and in turn drive the gyroscopic motion of the crushing head (not shown) within crusher 101. Belt 114 according to the specific implementation, comprises a parallel array of V-belts having a generally V-shaped inner facing profile to engage into circumferential grooves extending around the outer surface of each pulley 116, 113.

To ensure the efficient and optimum transfer of drive between pulleys 113 and 116, belt 114, according to the specific implementation, is ideally tensioned to a level where a 20 kg loading force applied to the outward facing surface of belt 114 at a region intermediate pulleys 113 and 116 provides a maximum vertically downward deflection of less than 70 mm. As will be appreciated, during use, belt 114 is subject to vibrational forces and other loads such that this tension cannot be maintained without assistance. Additionally, it is common for belt stretch (elongation) to occur following periods of use up to in particular 2% length increase. To maintain the desired tension at belt 114, plant 100 comprises a belt tensioning assembly 115 having a base frame 202 rigidly mounted to main frame 105 of the mobile crusher.

Assembly 115 comprises a swing arm 203 pivotally mounted at one end to base frame 202. The position relative to base frame 202 of swing arm 203 is controlled and adjustable via a linear actuator 204. Additionally, a shock absorbing ram 205 also extends between a region of base frame 202 and swing arm 203 to absorb and transmit vibrational forces imparted to swing arm 203 from belt 114 into base frame 202. As illustrated in figures 2 and 3A a belt tensioning pulley 112 is rotatably mounted at swing arm 203 so as to be positioned at an internal side 302 of the belt assembly 116, 114, 113, 112. That is pulley 112 is in contact with the inward facing surface 300 of belt 114 in a similar manner to crusher and drive motor pulleys 112, 113. Referring to figure 3B, belt 114 extends around pulleys 112, 113 and 116 to define a belt circuit having an inner region 302 and an outer region 303. According to the specific implementation, no drums or pulleys are positioned at the external belt region 303 so as to be in contact with the external facing surface 301 of belt 114. This configuration ensures that all pulleys 113, 112 and 116 achieve the maximum belt contact (typically referred to as belt wrap).

Figure 3B illustrates the different operational positions of the swing arm 203 and hence the tensioning pulley 112 and a spindle 409 that mounts pulley 112 at arm 203. As indicated, belt 114 extends around pulleys 113, 116 and 112 (as shown in figure 3A) to define a belt drive circuit having inner region 302 and outer region 303. Referring to an orientation where processing plant 100 is mounted on level ground and accordingly where chassis 106 is horizontal, drive pulley 113 is spaced apart from crusher pulley 116 by distance A. Additionally, tensioning pulley 112 is positioned laterally intermediate drive pulley 113 and crusher pulley 116 within region A. In particular, and referring to the central axis of spindle 409 and the axes of shafts 201 and 200 tensioning pulley 112 is laterally separated from drive pulley 113 by distance C and in turn is separated laterally from crusher pulley 116 by distance B. As illustrated, distance C is greater than distance B. Accordingly, in the lateral (or horizontal) direction, drive pulley 112 is positioned closer to crusher pulley 116 relative to drive pulley 113.

Swing arm 203 and in particular actuator 204 is adjustable between two extreme positions. A first position 304 provides a maximum tension to belt 114 as drive pulley 112 is positioned at its lowest region relative to pulleys 113 and 116. That is, spindle 409 is positioned below shaft 200. In this position 304, tensioning pulley 112 is positioned furthest from pulleys 113, 116. Actuator 204 is extended linearly to the second extreme position 306. In this position, spindle 409 is positioned at least partially above shaft 200 in a vertical direction. This position 306 corresponds to the position imparting the lowest tension to belt 114 and in turn may be referred to as the maintenance or service position where belt 114 may be removed and replaced. An intermediate position 305 corresponds to a general '*in-use*' position with tensioning pulley 112 applying a moderate tension to belt 114 without having to compensate for belt stretch. Actuator 204 is operative to displace arm 203 between positions 304 to 306 through position 305 via a continuous range of motion. As illustrated, and relative to a vertical plane, the uppermost position 306 is separated from the intermediate position 305 by distance H which is in turn separated from the lowermost position 304 by distance I. Motor pulley 113 is separated from spindle 409 at its uppermost position 306 by distance G. In this position 306, spindle 409 is positioned above shaft 200 by distance D. At this intermediate position 305, the centre of spingle 409 is separated from the centre of shaft 200 by distance E and the lowest maximum tension position 304 of spindle 409 is displaced below intermediate position 305 by distance F. Movement between extreme pulley positions 304 and 306 occurs with pulley 112, or at least a region of pulley 112, positioned laterally between pulleys 113 and 116 within distance A. As illustrated, the centre of spindle 409 follows an arcuate path such that movement from the lowermost maximum tension position 304 to the minimum and uppermost position 306, involves changes in the relative separation distances C and B.

As illustrated, tensioning pulley 112 is configured for contacting the lower circuit portion of belt 114 that extends from a lower region of each pulley 113, 116 in contrast to an upper belt circuit portion that extends from an upper region of each pulley 113, 116.

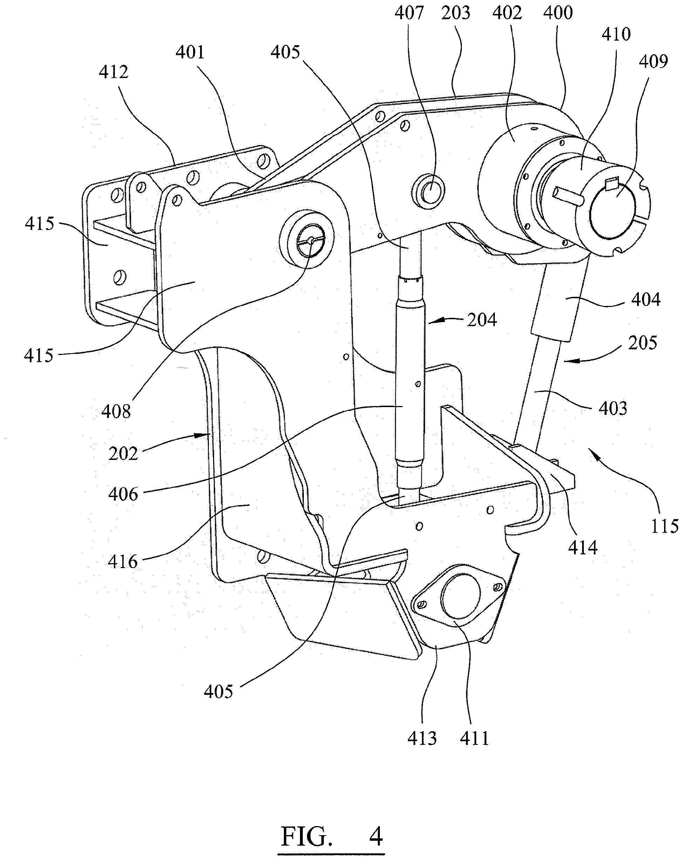

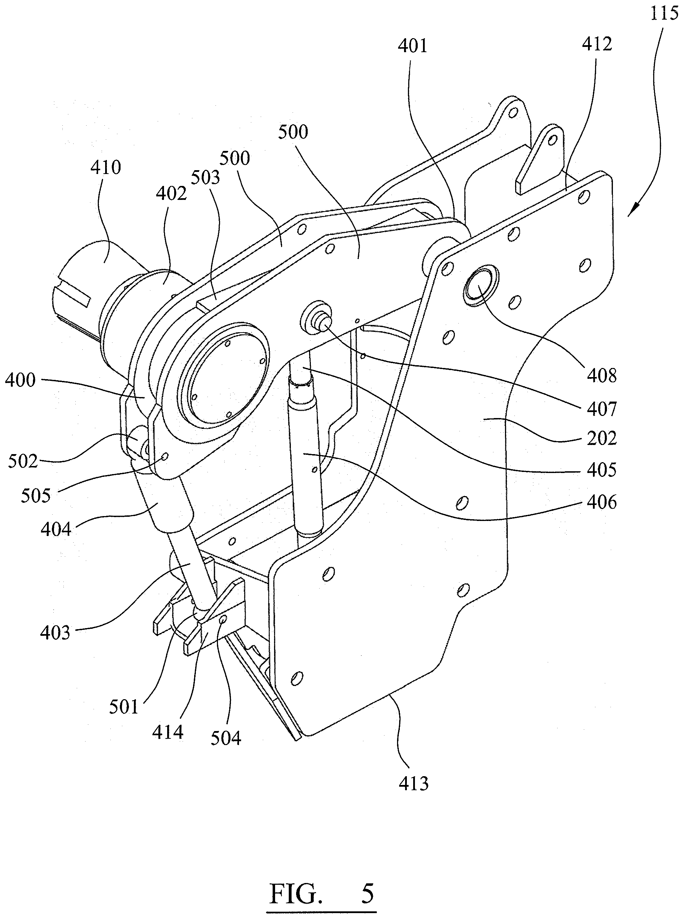

Referring to figures 4 and 5 the base frame 202 of the assembly 112 is modular and comprises a number of components and in particular and principally two spaced apart parallel plates 415 having an upper end 412 and a lower end 413 when mounted in normal use at main frame 105. A plurality of bridging plates 416 extend between plates 415. Swing arm 203 is similarly modular and comprises a pair of parallel spaced apart plates 500 attached together via bridge section 503. Arm 203 comprises a first end 401 pivotally mounted towards upper region 412 of frame 202 via a pivot pin 408 extending through plates 415 and 500. Second tension pulley 112 is mounted towards a second end 400 of arm 203 via a spindle and bearing assembly. The assembly comprises a housing 402 projecting laterally from one side of one plate 500 and accommodates a plurality of bearings (detailed below) and at least a part of the elongate spindle 409 that is cantilevered from arm first end 400 via mounting within housing 402. A hub 410 extends circumferentially around the exposed spindle end 409 and provides a mount for tension pulley 112.

Linear actuator 204 comprises a first end (detailed below) mounted at or towards the lower region 413 of base frame 202 whilst a second end (not shown) is mounted at a pivot pin 407 that extends through the plate 500 of swing arm 203. Pivot pin 407 is positioned at arm 203 at an approximate mid-length region between first and second ends 401, 400. Actuator 204, according to the specific implementation, is a '*turnbuckle*' configured for linear extension and retraction via corporation of corresponding screw threads. In particular, a central sleeve 406 comprises internal screw threads (not shown). A first upper shaft 405 extends from sleeve 406 to terminate by connection to pivot pin 407. A corresponding second lower shaft 405 extends downwardly from a lower region of sleeve 406 to terminate at the first end of actuator 204 attached to base frame 202. Each shaft 405 comprises corresponding external screw threads that are appropriately left and right handed such that by rotation of sleeve 406, shafts 405 extends linearly to displace swing arm 203 upwardly from base frame 202 and in particular lower region 413.

Shock absorbing ram 205 is mounted at a first end 501 to a mounting bracket 414 via pivot pin 504 projecting laterally to one side of frame 202. A second end 502 of ram 205 is attached at the region of arm second end 400 via pivot pin 505 of arm 203. Ram 205 comprises a conventional cylinder arrangement having a sleeve 404 and a shaft 403 capable of linear extension and retraction relative to sleeve 404. Ram 205 may comprise a hydraulic or pneumatic cylinder arrangement.

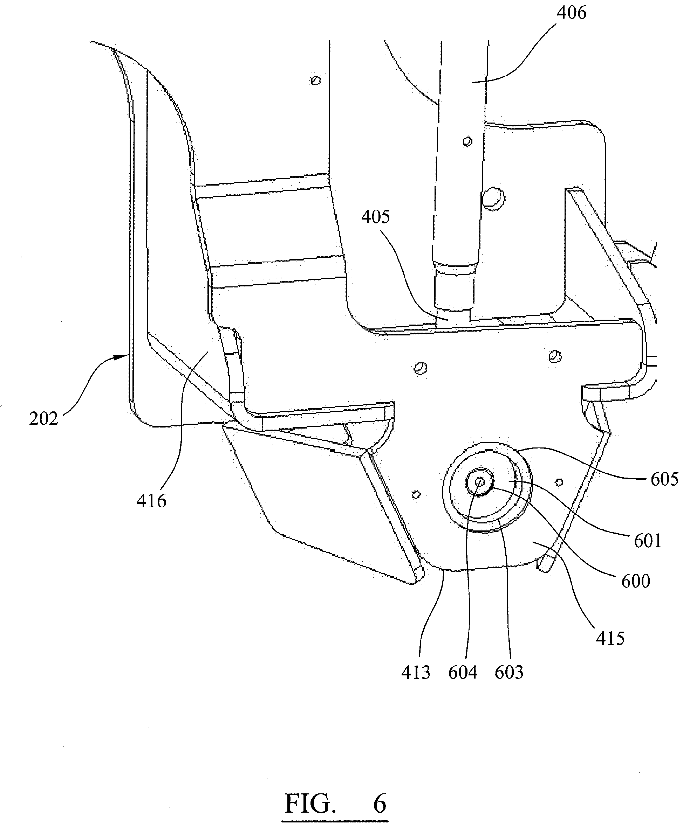

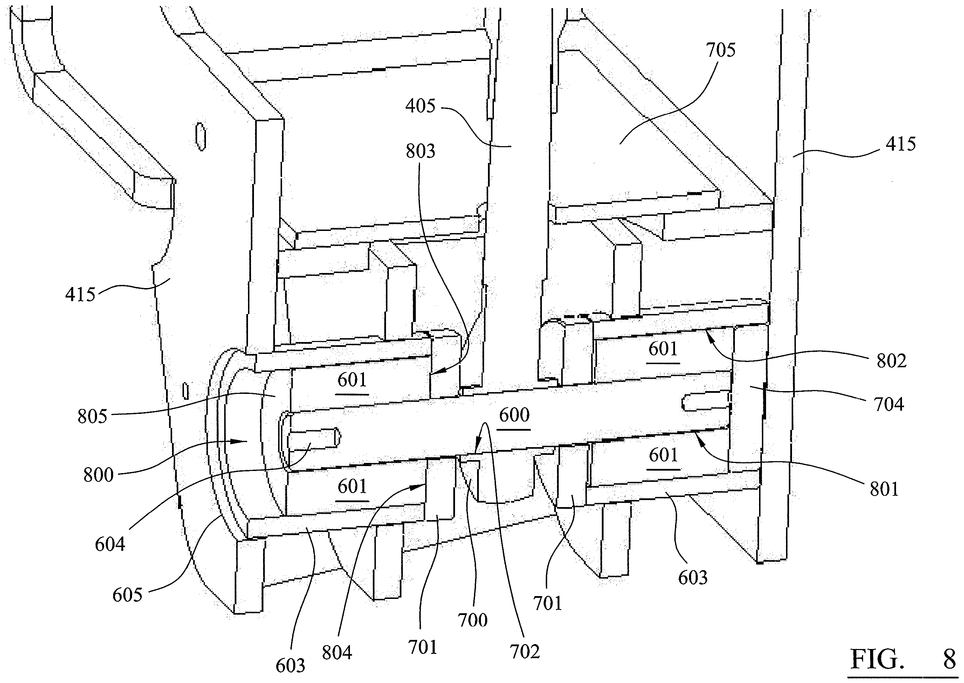

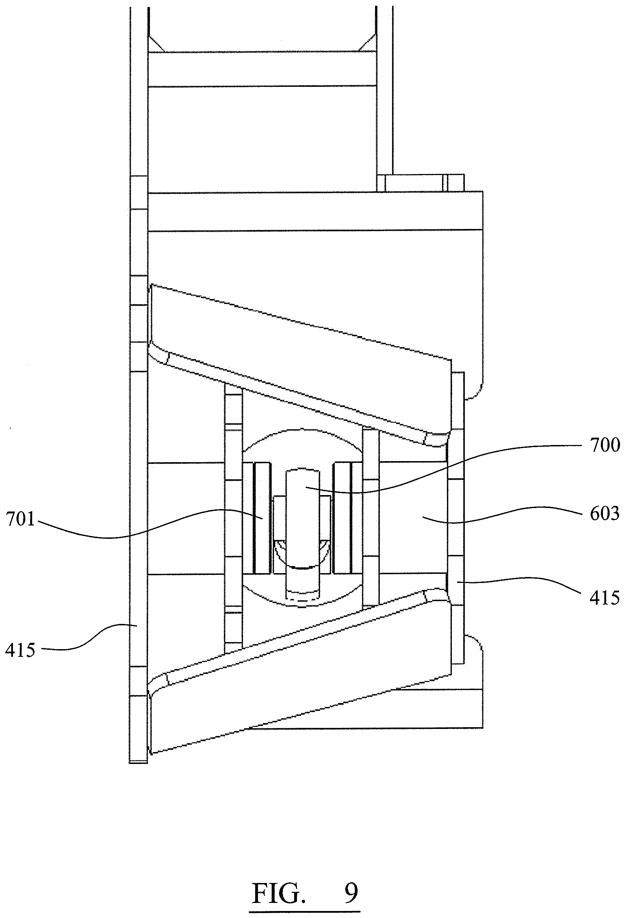

Figures 6 to 9 illustrate in further detail the mechanism for attachment and mounting of the linear actuator 204 towards the lower region 413 of frame 202. In particular, one of the pair of plates 415 comprises an aperture 605. A first cylindrical housing drum 603 projects internally from first plate 415 from the region of aperture 605 to define a first cylindrical-shaped chamber 800 extending from aperture 605. Chamber 800 is terminated at its innermost end by an annular cap 701. A corresponding second housing drum 603 of an identical shape and configuration to the first drum 603 is positioned coaxially and extends from an inside surface of the second plate 415. A corresponding annular end cap 701 seals the second cylindrical chamber 800 of the second housing 603. Due to the relative axial length of each drum 603, a small axial gap is created between the two drums 603 at an approximate mid-point between plates 415. An elongate axel 600 extends through each internal chamber 800 and the intermediate space between the drums 603. Axel 600 comprises a short-length internal bore 603 extending axially from each end. Each bore 604 is threaded to receive an engaging tool to allow removal of axel 600 from within chambers 800. A pair of deformable bushings 601 comprises a generally cylindrical configuration and have a central bore 603 extending through their respective length. Bores 703 are dimensioned to accommodate axel 600. Each bushing 601 is housed within each respective drum 603 such that the outward facing surface of each bushing 601 is positioned in contact with an inward facing surface 802 of each drum 603. Additionally, the radially inward facing surface of bushings 601 that defines bores 703 are positioned in contact with the external surface 801 of axel 600. Accordingly, bushings 601 are positioned intermediate between axel 600 and the drum walls 603 that define internal chambers 800. An annular spacer 704 is positioned at one end of second bushing 601 within drum 603. The opposite end of second bushing 601 is positioned in contact with cap 701. In particular, and referring to the first drum 603, the end face 803 of bushing 601 is positioned in contact with face 804 of cap 701.

The first end of linear actuator 204 is terminated by an eyelet body 700 comprising a central bore 702 shaped and dimensioned for positioning around the external surface of axel 600. Eyelet 700 is also dimensioned to be accommodated within the gap region between the coaxial drums 603 at a mid-region between plates 415. Accordingly, the first end 702 of actuator 204 is pivotally mounted at base frame 202 via axel 600 and in turn bushing 601 and drums 603. The bushing and axel assembly is maintained within the respective chambers 800 via an end cap 411 having an annular spacer 706 projecting from one side and corresponding in shape and dimension to spacer 704. End cap 411 and in particular spacer 706 is secured in position at aperture 605.

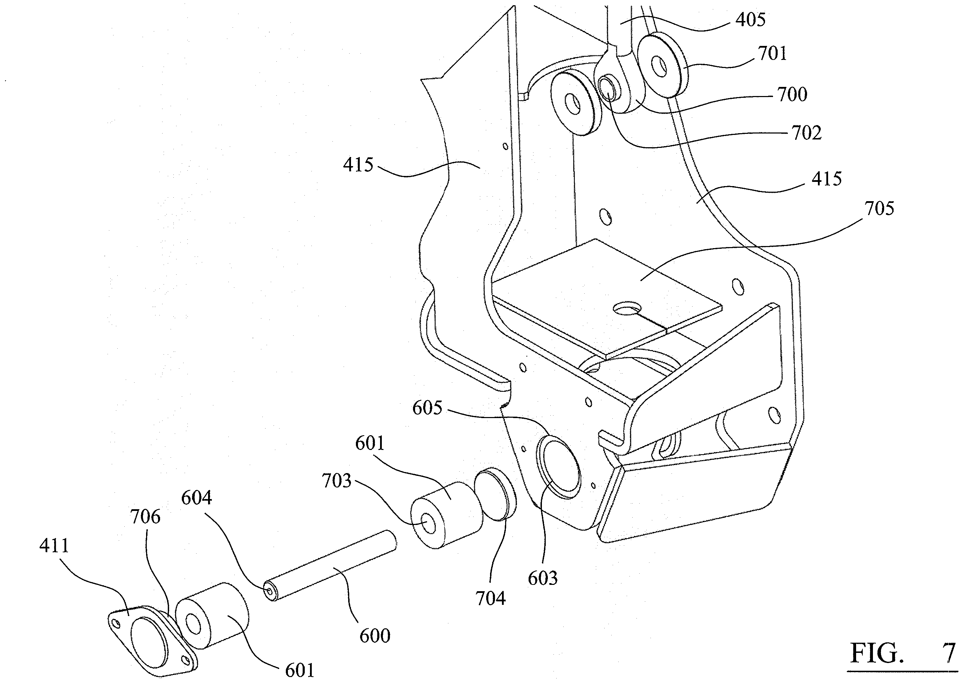

According to the specific implementation, each bushing 601 is formed from a resiliently deformable material being a polyurethane. This is advantageous to effectively absorb the vibration and loading forces transferred from the actuator 205 to base frame 202. The inventors have identified that a resiliently deformable material is particularly beneficial to ensure any lateral movements of axel 600 within drums 603 are minimised whiles providing a dampening effect on vibrations and maximum loading force transfer. As illustrated in figure 7, a sealing rubber 705 extends over the region of the mounting drums 603.

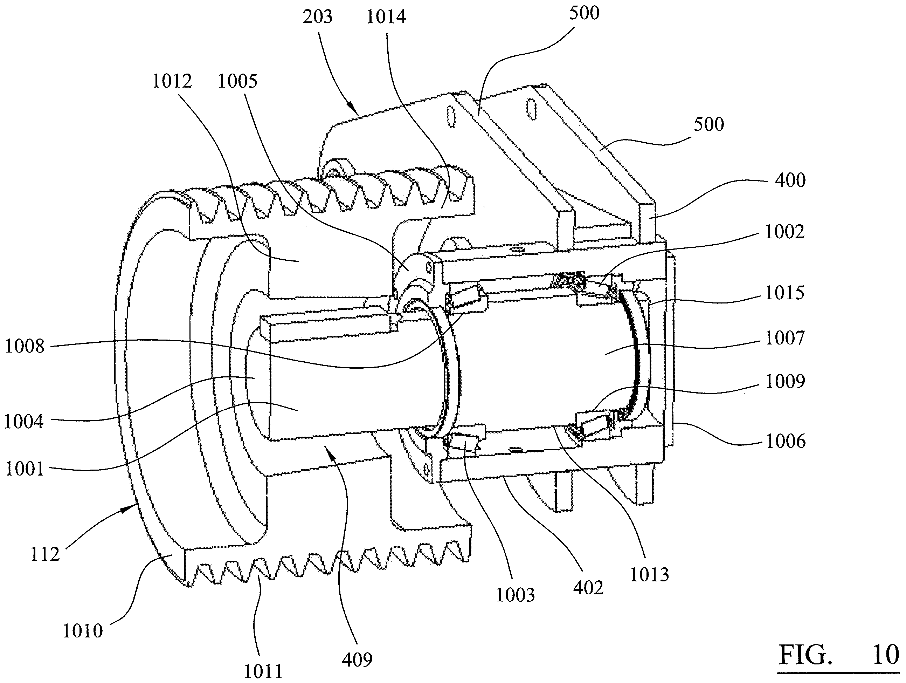

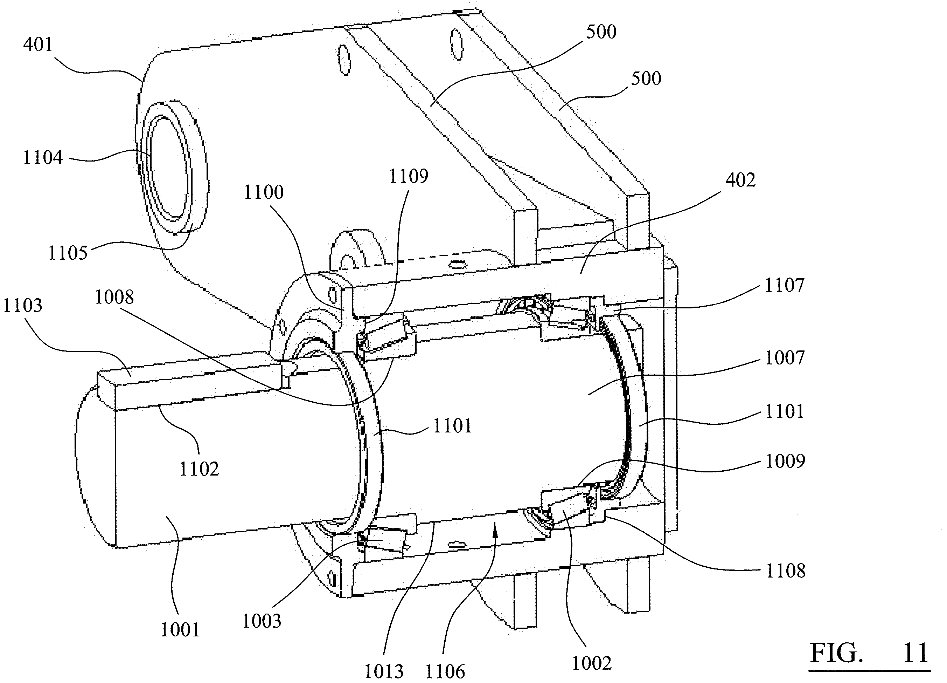

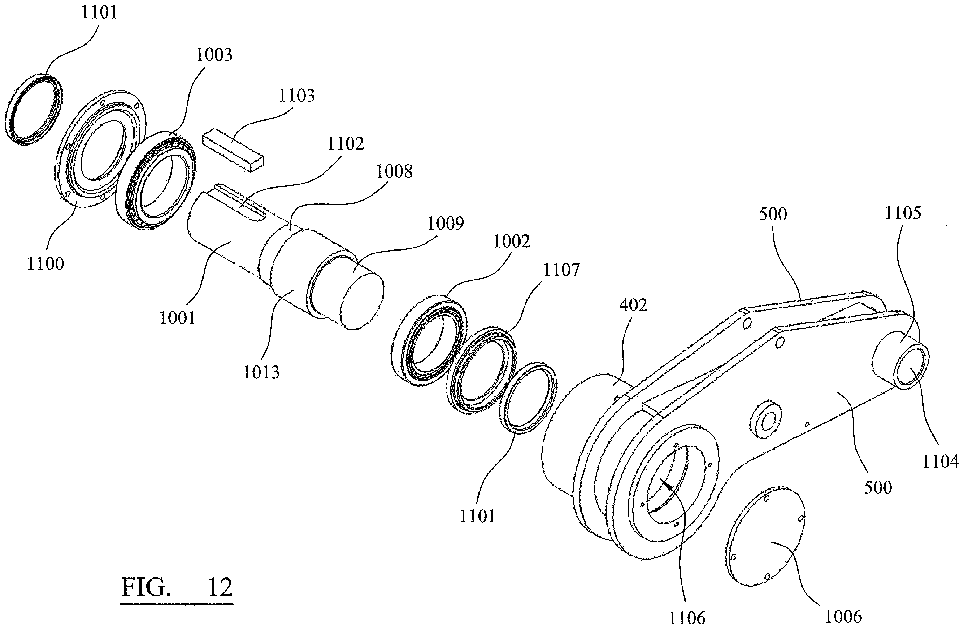

Figures 10 to 12 illustrate in more detail the assembly for mounting the tension pulley 112 at swing arm 203. In particular, a generally cylindrical drum 402 extends laterally and in particular perpendicular to one side of plates 500. Drum 402 is hollow to define an internal chamber 106 to, in part, accommodate spindle 409. In particular, spindle 409 comprises a first end 1004 positioned furthest from drum 402 and a second end 1015 completely housed and positioned towards one end of chamber 1106 defined by an end plate 1006 that closes this end of chamber 1106. A first axial region 1007 positioned closest to second end 1015 is accommodated within drum 402 whilst a second axial region 1001 is cantilevered to extend beyond drum 402 and in particular an annular end cap 1100 that is mounted at the upper end of drum 402. First region 1007 represents approximately 58% of the total axial length of spindle 409 and second region 1001 represents the remaining 42% of the axial length. Drum 402 is integrally formed with plates 500 and provides a mount for a pair of annular bearings 1002, 1003 that extend circumferentially around and at axially separated parts of spindle first region 1007. An alignment spacer ring (gasket) 1107 is positioned axially intermediate first bearing 1002 and end plate 1006. Second bearing 1003 is positioned at the same axial location as end cap 1100 so as to be seated intermediate between a radially innermost circumference of end cap 1100 and the radially outer surface of spindle 409 at the junction between the first 1007 and second 1001 regions. The radially internal profile of drum 402 is '*stepped*' such that the internal diameter of chamber 1106 is variable along its axial length between end cap 1100 and end plate 1006. In particular, stepped region 1108 is shaped and dimensioned to provide a circumferential abutment shoulder to ensure correct positioning of spacer ring 1107 that extends radially over seal 1101 positioned axially to one side of first bearing 1102. Gasket 1107 also ensures correct and secure seating of first bearing 1002. Additionally, end cap 1100 comprises an annular shoulder 1109 for positioning in contact with the radially inward surface of drum 402 and to abut second bearing 1003 to ensure its correct alignment and secure positioning within housing drum 402. Spindle 409 also comprises a '*stepped*' configuration along its axial length within first region 1007. In particular, a first shoulder region 1009 provides a circumferential seat for first bearing 1002 and a second shoulder 1008 provides a circumferential seat for second bearing 1003. Shoulders 1008 and 1009 are spatially separated and defined, in part, by a radially raised section 1013 that steps radially outward from shoulders 1009, 1008. The stepped configuration of both spindle 409 and drum 402 ensure the correct and secure positioning of the various working components 1002, 1003 and in turn a secure cantilevered mounting of spindle 409 towards the second end 400 of swing arm 203. This arrangement also provides for an axially compact tension pulley mounting assembly. Figures 11 and 12 also illustrate a corresponding cylindrical mounting assembly 1105 positioned at arm first end 401 to define an internal bore 1104 that accommodates pivot pin 408 to pivotally mount swing arm 203 at base frame 202.

A groove 1102 extends axially along a part of the spindle second region 1001. An elongate key 1103 is configured to at least partially sit in a groove 1102 and functions to secure tension pulley 112 to the spindle second end 1001. As indicated, tension pulley 112 comprises a radially outermost part 1010 that extends around and is radially spaced from spindle 409. An annular spoke 1012 provides a radial connection between the outermost part 1010 and hub 410 (referring to figure 4) that is seated about spindle second region 1001. As described, in order to interface with the V-belt surface 300, outer part 1010 comprises circumferential grooves 1011 in its outermost surface. The shape and configuration of grooves 1011 are identical to the corresponding grooves formed at crusher and drive pulleys 116, 113. Due to the axially compact construction of the tension pulley mounting assembly 402,409 an axially end region 1014 of pulley outer part 1010 axially overlaps the capped (1100) end region of drum 402 encompassing second bearing 1003. That is, pulley end region 1014 is positioned in close proximity to plate 500 from which drum 402 extends. This axially compact construction reduces deformation forces on spindle 409 and inhibits any lateral deflection due to loading forces transferred from belt 114 onto pulley 112. The configuration also provides that belt 114 and additional pulleys 116, 113 are mounted laterally as close as possible to the side of motor 110 and crusher 101. This assists with reducing as far as possible the overall width of the mobile plant 100 which is advantageous for transport purposes.

In use, the relative position of swing arm 203 and hence tension pulley 112 relative to base frame 202 is manually adjustable via linear extension and retraction of shaft 405 relative to sleeve 406 of the turnbuckle 204. Accordingly, tension pulley 112 is operative by adjustment to follow a curved and arcuate path within inner belt region 302. That is, via adjustment of sleeve 406 to minimise the axial extension of shafts 405, pulley 112 is moved vertically downward to increase the tension force applied to belt 114 in the event of belt stretch and/or to assist with minimising belt movement and vibration. When sleeve 406 is adjusted to achieve maximum axial extension of shafts 405, arm 203 and pulley 112 are displaced vertically upward following the arcuate path to a position immediately below the upper section of belt 114 extending between pulleys 113 and 116. This pulley position minimises tension applied to belt 114 to allow maintenance, replacement and repair of the belt drive components 111. The present tension assembly 115 is advantageous to minimise stress and fatigue at the crusher and motor drive shafts 200, 201 particularly during initial start-up and shut-down of crusher 101 due to the magnitude of inertia and vibrations transmitted through belt 114 as the crushing head rotates within the crushing chamber (not shown). The available application of tension to belt 114 and the minimising of vibration within the entire drive belt assembly 111 is achieved, in part, by the cantilever mounting of the swing arm 203; the non-rigid mounting of actuator shaft end 700 via bushings 601; the shock absorbing ram 205 and; the axially compact and secure mounting of tension pulley 112 at swing arm 203.

## Claims

1. Crusher belt tensioning apparatus (115) for mounting at a crusher unit (100) having a crusher pulley (116) mounted at a shaft (200) to actuate a crusher (101) forming part of the unit (100), a drive pulley (113) mounted at a shaft (201) driven by a motor (110) and a belt (114) extending around the crusher pulley (116) and the drive pulley (113) to transfer drive from the motor (110) to the crusher (101), the apparatus comprising:
a base frame (202) mountable at a chassis frame (105) of the crusher unit (100);
a tension pulley (112) mounted at the base frame (202) to contact and apply a tension force to the belt (114);
a swing arm (203) pivotally mounted at the base frame (202) via a first region of the swing arm (203), the tension pulley (112) mounted at a second region of the swing arm (203); and
**characterised by**:
a linear actuator (204) having a first end (700) attached to the base frame (202) and a second end attached to the swing arm (203) to act between the base frame (202) and the swing arm (203) to control a position of the swing arm (203) and the tension pulley (112) relative to the base frame (202).

2. The apparatus of claim 1 wherein the swing arm (203) is pivotally attached to the base frame (202) at or towards a first end (401) of the swing arm (203), the tension pulley (112) rotatably mounted at or towards a second end (400) of the swing arm (203).

3. The apparatus as claimed in claims 1 or 2 wherein the actuator (204) comprises a linear extendable rod.

4. The apparatus as claimed in any preceding claim further comprising a shock absorber ram (205) having a first end (501) attached to the base frame (202) and a second end (502) attached to the swing arm (203).

5. The apparatus as claimed in any preceding claim wherein the belt (114) defines a belt circuit having an inner region enclosed by the belt (114) such that the tension pulley (112) is mounted within the inner region enclosed by the belt circuit to contact an inward facing side (300) of the belt (114).

6. The apparatus as claimed in any preceding claim wherein the tension pulley (112) is mounted at the swing arm (203) via a spindle and bearing assembly.

7. The apparatus as claimed in claim 6 when dependent upon claim 2 wherein the swing arm (203) comprises a bearing housing (402) positioned at or towards the second end (400) of the arm (203) to house bearings (1002, 1003) and at least a part of the spindle (409).

8. The apparatus as claimed in claim 7 wherein a region of a radially outer surface of the tension pulley (112) is positioned over the bearing housing (402) relative to a longitudinal axial of the spindle (409).

9. The apparatus as claimed in claim 3 wherein the actuator (204) comprises a threaded shaft (405) cooperating with a threaded sleeve (406) such that by cooperation of the threads of the shaft (405) and the sleeve (406) the shaft (405) is configured for linear extension and retraction relative to the sleeve (406).

10. The apparatus as claimed in claim 3 wherein the actuator (204) is mounted at the base frame (202) via an axel assembly at least partially accommodated within an axel mount (603) provided at the base frame (202), the axel assembly comprising:
an axel (600) having a length extending substantially perpendicular or transverse to a length of the actuator (204);
at least one bushing (601) mounted about the axel (600) and accommodated within the axel mount (605);
wherein a force may be transmitted from the actuator (204) via the axel (600) and the bushing (601) to the base frame (202).

11. The apparatus as claimed in claim 10 comprising two bushings (601) positioned about the axel (600) either side of the actuator (204) in the axial direction of the axel (600).

12. The apparatus as claimed in any preceding claim when dependent upon claim 4 and claim 2 wherein the second end of the absorber ram (502) is attached at or towards the second end (400) of the swing arm (203) and the second end of the actuator (204) is attached to a region along a length of the swing arm (203) between the first end (401) and the second end (400) of the arm (203).

13. The apparatus as claimed in any preceding claim wherein the first end (700) is mounted at or towards a lower region (413) of the base frame (202) and the second end of the actuator (204) is mounted at a pivot pin (407) extending through a plate (500) of the swing arm (203).

14. A mobile crusher unit (100) having an undercarriage (106) configured to allow the mobile crusher unit (100) to move in contact with the ground, a chassis frame (105) to mount the undercarriage (106) and a motor driven crusher (101) mounted at the chassis frame (105) comprising belt tensioning apparatus (115) as claimed in any preceding claim.

15. The crusher unit (100) as claimed in claim 14 wherein:
the belt (114) extends around the crusher pulley (116) and the drive pulley (113) to define a belt circuit having an inner region enclosed by the belt (114);
the tension pulley (112) is mounted at the belt circuit in contact with the belt (114) within the inner region enclosed by the belt (114); and
the actuator (204) is configured to change the position of the tension pulley (112) between a first position in the which the tension pulley (112) imparts a high tension force to the belt (114) and a second position in the which the tension pulley (112) imparts a low tension force to the belt (114) relative to the high tension force.

## Patentansprüche

1. Brechergurtspannvorrichtung (115) zum Befestigen an einer Brechereinheit (100) mit einer Brecherrolle (116), die zum Antreiben eines Brechers (101), der einen Teil der Einheit (100) bildet, an einer Welle (200) angebracht ist, einer Antriebsrolle (113), die an einer von einem Motor (110) angetriebenen Welle (201) montiert ist, und einem Gurt (114), der sich um die Brecherrolle (116) und die Antriebsrolle (113) erstreckt, sodass er eine Antriebskraft von dem Motor (110) auf den Brecher (101) überträgt, wobei die Vorrichtung aufweist:
einen Grundrahmen (202), der auf einen Fahrgestellrahmen (105) der Brechereinheit (100) montierbar ist;
eine Spannrolle (112), die an dem Grundrahmen (202) angebracht ist, sodass sie den Gurt (114) berührt und eine Spannkraft auf diesen ausübt;
einen Schwenkarm (203), der über einen ersten Abschnitt des Schwenkarms (203) schwenkbar an dem Grundrahmen (202) montiert ist, wobei die Spannrolle (112) an einem zweiten Abschnitt des Schwenkarms (203) angebracht ist; und
**gekennzeichnet durch**
einen Linearantrieb (204) mit einem ersten an dem Grundrahmen (202) angebrachten Ende (700) und einem zweiten an dem Schwenkarm (203) angebrachten Ende zum Wirken zwischen dem Grundrahmen (202) und dem Schwenkarm (203), so dass eine Position des Schwenkarms (203) und der Spannrolle (112) relativ zu dem Grundrahmen (202) gesteuert wird.

2. Vorrichtung nach Anspruch 1, **dadurch gekennzeichnet, dass** der Schwenkarm (203) schwenkbar an dem Grundrahmen (202) an einem ersten Ende (401) oder in Richtung eines ersten Endes (401) des Schwenkarms (203) angebracht ist, wobei die Spannrolle (112) drehbar an einem zweiten Ende (400) oder in Richtung eines zweiten Endes (400) des Schwenkarms (203) angebracht ist.

3. Vorrichtung nach den Ansprüchen 1 oder 2, **dadurch gekennzeichnet, dass** der Antrieb (204) einen linear ausfahrbaren Stab aufweist.

4. Vorrichtung nach einem der vorhergehenden Ansprüche, **dadurch gekennzeichnet, dass** die Vorrichtung weiterhin eine Stoßdämpferramme (205), mit einem an den Grundrahmen (202) angebrachten ersten Ende (501) und einem an dem Schwenkarm (203)angebrachten zweiten Ende (502) aufweist.

5. Vorrichtung nach einem der vorhergehenden Ansprüche, **dadurch gekennzeichnet, dass** der Gurt (114) einen Gurtkreislauf mit einem von dem Gurt (114) umschlossenen inneren Bereich festlegt, sodass die Spannrolle (112) innerhalb des von dem Gurtkreislauf eingeschlossenen inneren Bereichs so angebracht ist, dass die Spannrolle (112) eine nach innen gerichtete Seite (300) des Gurtes (114) berührt.

6. Vorrichtung nach einem der vorhergehenden Ansprüche, **dadurch gekennzeichnet, dass** die Spannrolle (112) über eine Spindel und eine Lageranordnung an dem Schwenkarm (203) angebracht ist.

7. Vorrichtung nach Anspruch 6, soweit abhängig von Anspruch 2, **dadurch gekennzeichnet, dass** der Schwenkarm (203) ein Lagergehäuse (402) aufweist, das an dem zweiten Ende (400) oder in Richtung des zweiten Endes (400) des Schwenkarms (203) angeordnet ist, um Lager (1002, 1003) und mindestens einen Teil der Spindel (409) aufzunehmen.

8. Vorrichtung nach Anspruch 7, **dadurch gekennzeichnet, dass** ein Bereich einer radial äußeren Oberfläche der Spannrolle (112) über dem Lagergehäuse (402) relativ zu einer Längsachse der Spindel (409) angeordnet ist.

9. Vorrichtung nach Anspruch 3, **dadurch gekennzeichnet, dass** der Antrieb (204) eine Gewindewelle (405) beinhaltet, die mit einer Gewindehülse (406) zusammenwirkt, sodass durch ein Zusammenwirken der Gewinde der Welle (405) und der Hülse (406), die Welle (405) für einen linearen Vorschub und Rückzug relativ zu der Hülse (406) eingerichtet ist.

10. Vorrichtung nach Anspruch 3, **dadurch gekennzeichnet, dass** der Antrieb (204) über eine zumindest teilweise innerhalb einer an dem Grundrahmen (202) vorgesehenen Achshalterung (603) aufgenommenen Achsanordnung an dem Grundrahmen (202) befestigt ist, wobei die Achsanordnung umfasst:
eine Achse (600) mit einer Länge, die sich im Wesentlichen senkrecht oder quer zu einer Länge des Antriebs (204) erstreckt;
mindestens eine Buchse (601), die um die Achse (600) montiert ist und innerhalb der Achsaufnahme (605) aufgenommen ist;
wobei eine Kraft von dem Antrieb (204) über die Achse (600) und die Buchse (601) auf den Grundrahmen (202) übertragen werden kann.

11. Vorrichtung nach Anspruch 10, **dadurch gekennzeichnet, dass** zwei Buchsen (601) um die Achse (600) in der axialen Richtung der Achse (600) auf jeder Seite des Antriebs (204) angeordnet sind.

12. Vorrichtung nach einem der vorhergehenden Ansprüche, soweit abhängig von Anspruch 4 und Anspruch 2, **dadurch gekennzeichnet, dass** das zweite Ende (502) der Absorberramme an dem zweiten Ende (400) oder in Richtung des zweiten Endes (400) des Schwenkarms (203) und das zweite Ende des Antriebs (204) an einem Bereich entlang einer Länge des Schwenkarms (203) zwischen dem ersten Ende (401) und dem zweiten Ende (400) des Arms (203) befestigt ist.

13. Vorrichtung nach einem der vorhergehenden Ansprüche, **dadurch gekennzeichnet, dass** das erste Ende (700) an einem unteren Bereich oder in Richtung eines unteren Bereichs (413) des Grundrahmens (202) und das zweite Ende des Antriebs (204) an einen Lagerbolzen (407), der sich durch eine Platte (500) des Schwenkarms (203) erstreckt, angebracht ist.

14. Mobile Brechereinheit (100) mit einem Fahrwerk (106), das so eingerichtet ist, dass es der mobilen Brechereinheit (100) möglich ist, sich in Kontakt mit dem Boden zu bewegen, einem Fahrgestellrahmen (105), an dem das Fahrwerk (106) und ein motorbetriebener Brecher (101), der eine Gurtspannvorrichtung (115) nach einem der vorhergehenden Ansprüche umfasst, befestigt sind.

15. Brechereinheit (10) nach Anspruch 14, **dadurch gekennzeichnet, dass**:
der Gurt (114), die Brecherrolle (116) und die Antriebsrolle (113) umspannt, sodass ein Gurtkreislauf mit einem inneren Bereich festgelegt wird, der durch den Gurt (114) eingeschlossen wird;
die Spannrolle (112) an dem Gurtkreislauf innerhalb des inneren Bereichs durch den Gurt (114) eingeschlossen und in Kontakt mit dem Gurt (114) montiert ist, und wobei die Spannrolle (112) und der Antrieb (204) so eingerichtet sind, dass sie die Position der Spannrolle (112) zwischen einer ersten Position, in der die Spannrolle (112) eine große Zugkraft auf den Gurt (114) ausübt und einer zweiten Position, in der die Spannrolle (112) eine kleine Zugkraft, verglichen mit den großen Zugkräften, auf den Gurt (114) ausübt, ändern.

## Revendications

1. Appareil de tension de courroie de concasseur (115) destiné à monter une unité de concasseur (100) ayant une poulie de concasseur (116) montée sur un arbre (200) pour actionner un concasseur (101) constituant une partie de l'unité (100), une poulie d'entraînement (113) montée sur un arbre (201) entraîné par un moteur (110) et une courroie (114) autour de la poulie de concasseur (116) et de la poulie d'entraînement (113) pour transférer un entraînement du moteur (110) vers le concasseur (101), l'appareil comprenant :
une structure de base (202) pouvant être montée sur une structure de châssis (105) de l'unité de concasseur (100) ;
une poulie de tension (112) montée sur la structure de base (202) pour être en contact et appliquer une force de tension à la courroie (114) ;
un bras oscillant (203) monté avec possibilité de pivotement sur la structure de base (202) par le biais d'une première région du bras oscillant (203), la poulie de tension (112) étant montée au niveau d'une deuxième région du bras oscillant (203) ; et
**caractérisé par** :
un actionneur linéaire (204) ayant une première extrémité (700) fixée à la structure de base (202) et une deuxième extrémité fixée au bras oscillant (203) pour agir entre la structure de base (202) et le bras oscillant (203) pour commander une position du bras oscillant (203) et de la poulie de tension (112) par rapport à la structure de base (202).

2. Appareil selon la revendication 1 dans lequel le bras oscillant (203) est fixé avec possibilité de pivotement à la structure de base (202) au niveau ou en direction d'une première extrémité (401) du bras oscillant (203), la poulie de tension (112) étant montée avec possibilité de rotation au niveau ou en direction d'une deuxième extrémité (400) du bras oscillant (203).

3. Appareil selon les revendications 1 ou 2 dans lequel l'actionneur (204) comprend une tige extensible linéaire.

4. Appareil selon l'une quelconque des revendications précédentes comprenant en outre un vérin d'absorption des chocs (205) ayant une première extrémité (501) fixée à la structure de base (202) et une deuxième extrémité (502) fixée au bras oscillant (203).

5. Appareil selon l'une quelconque des revendications précédentes dans lequel la courroie (114) définit un circuit de courroie ayant une région intérieure entourée par la courroie (114) de sorte que la poulie de tension (112) soit montée dans la région intérieure entourée par le circuit de courroie pour être en contact avec un côté orienté vers l'intérieur (300) de la courroie (114).

6. Appareil selon l'une quelconque des revendications précédentes dans lequel la poulie de tension (112) est montée sur le bras oscillant (203) par le biais d'un assemblage broche et roulement.

7. Appareil selon la revendication 6 lorsqu'elle dépend de la revendication 2 dans lequel le bras oscillant (203) comprend un logement de roulements (402) positionné au niveau ou en direction de la deuxième extrémité (400) du bras (203) pour recevoir des roulements (1002, 1003) et au moins une partie de la broche (409).

8. Appareil selon la revendication 7 dans lequel une région d'une surface radialement extérieure de la poulie de tension (112) est positionnée sur le logement de roulements (402) par rapport à un axe longitudinal de la broche (409).

9. Appareil selon la revendication 3 dans lequel l'actionneur (204) comprend un arbre fileté (405) coopérant avec un manchon fileté (406) de sorte que par coopération des filetages de l'arbre (405) et du manchon (406) l'arbre (405) est configuré pour une extension et une rétractation linéaires par rapport au manchon (406).

10. Appareil selon la revendication 3 dans lequel l'actionneur (204) est monté sur la structure de base (202) par le biais d'un assemblage d'axe au moins partiellement reçu dans un support d'axe (603) prévu sur la structure de base (202), l'assemblage d'axe comprenant :
un axe (600) ayant une longueur s'étendant substantiellement perpendiculairement ou transversalement par rapport à une longueur de l'actionneur (204) ;
au moins une douille (601) montée autour de l'axe (600) et reçue dans le support d'axe (605) ;
dans lequel une force peut être transmise à partir de l'actionneur (204) par le biais de l'axe (600) et de la douille (601) à la structure de base (202).

11. Appareil selon la revendication 10 comprenant deux douilles (601) positionnées autour de l'axe (600) des deux côtés de l'actionneur (204) dans la direction axiale de l'axe (600).

12. Appareil selon l'une quelconque des revendications précédentes lorsqu'elle dépend de la revendication 4 et de la revendication 2 dans lequel la deuxième extrémité du vérin d'absorption (502) est fixée au niveau ou en direction de la deuxième extrémité (400) du bras oscillant (203) et la deuxième extrémité de l'actionneur (204) est fixée à une région le long d'une longueur du bras oscillant (203) entre la première extrémité (401) et la deuxième extrémité (400) du bras (203).

13. Appareil selon l'une quelconque des revendications précédentes dans lequel la première extrémité (700) est montée au niveau ou en direction d'une région inférieure (413) de la structure de base (202) et la deuxième extrémité de l'actionneur (204) est montée au niveau d'une tige de pivot (407) s'étendant à travers une plaque (500) du bras oscillant (203).

14. Unité de concasseur mobile (100) ayant un train de roulement (106) configuré pour permettre à l'unité de concasseur mobile (100) de se déplacer en contact avec le sol, une structure de châssis (105) pour monter le train de roulement (106) et un concasseur entraîné par un moteur (101) monté sur la structure de châssis (105) comprenant un appareil de tension de courroie (115) selon l'une quelconque des revendications précédentes.

15. Unité de concasseur (100) selon la revendication 14 dans laquelle :
la courroie (114) s'étend autour de la poulie de concasseur (116) et de la poulie d'entraînement (113) pour définir un circuit de courroie ayant une région intérieure entourée par la courroie (114) ;
la poulie de tension (112) est montée au niveau du circuit de courroie en contact avec la courroie (114) dans la région intérieure entourée par la courroie (114) ; et
l'actionneur (204) est configuré pour modifier la position de la poulie de tension (112) entre une première position dans laquelle la poulie de tension (112) applique une forte force de tension à la courroie (114) et une deuxième position dans laquelle la poulie de tension (112) applique une faible force de tension à la courroie (114) par rapport à la forte force de tension.
